# Europäisches Patentamt

## European Patent Office

## Office européen des brevets

(19)

(11) Veröffentlichungsnummer: **0 230 612**
**B1**

(12)

# EUROPÄISCHE PATENTSCHRIFT

(45) Veröffentlichungstag der Patentschrift:
12.10.88

(51) Int. Cl.⁴: **B 65 G 65/28**

(21) Anmeldenummer: **86117584.2**

(22) Anmeldetag: **17.12.86**

(54) Seitenkratzer für Schüttguthalde.

(30) Priorität: **27.01.86 DE 3602360**

(43) Veröffentlichungstag der Anmeldung:
**05.08.87 Patentblatt 87/32**

(45) Bekanntmachung des Hinweises auf die Patenterteilung:
**12.10.88 Patentblatt 88/41**

(84) Benannte Vertragsstaaten:
**DE ES FR GB IT**

(56) Entgegenhaltungen:
**DE-A-2 757 947**

(73) Patentinhaber: **Krupp Polysius AG, Graf- Galen-Strasse 17, D-4720 Beckum (DE)**

(72) Erfinder: **Lütke, Hubertus, Klarastrasse 34, D-4720 Beckum (DE)**

(74) Vertreter: **Tetzner, Volkmar, Dr.- Ing. Dr. jur., Van-Gogh- Strasse 3, D-8000 München 71 (DE)**

EP 0 230 612 B1

LIBER, STOCKHOLM 1988

## Beschreibung

Die Erfindung betrifft einen Seitenkratzer (entsprechend dem Oberbegriff des Anspruches 1) zum Schüttgutaustrag aus einer Schüttguthalde, wie z. B. aus DE-A-2 757 947 bekannt.

Seitenkratzer der im Oberbegriff des Anspruches 1 vorausgesetzten Art sind zum Zwecke des Schüttgutaustrages aus einer Schüttguthalde an der Längsseite der Halde verfahrbar, wobei sie die Halde von ihrer Oberfläche her abtragen. Der Austrag des Schüttgutes erfolgt hierbei vom Haldenfirst zum Haldenfuß in der Weise, daß die Kratzerschaufeln um ein bestimmtes Maß in die Haldenfläche eingesenkt werden, wobei die Kratzerschaufeln das Schüttgut vom Haldenfirst zum Haldenfuß fördern und gleichzeitig der Kratzerausleger in Längsrichtung der Halde verfahren wird.

Um die Kratzerschaufeln bei fortschreitendem Schüttgutaustrag stets um ein bestimmtes Maß in die Haldenfläche einsenken zu können, ist der Kratzerausleger im Bereich des Haldenfußes um eine parallel zur Längsrichtung der Halde verlaufende Achse schwenkbar. Hierdurch bedingt ist die Schnittiefe der Kratzerschaufeln am Haldenfirst am größten und am Hadenfuß etwa Null. Das abgeräumte Schüttgut besitzt infolgedessen das Querschnittsprofil eines langgestreckten Dreiecks. Hieraus ergeben sich im unteren Bereich des Kratzerauslegers gewisse Probleme für den Schüttgutaustrag.

Im oberen Bereich der Halde, wo die Kratzerschaufeln verhältnismäßig tief in das Schüttgut eindringen, befindet sich auf der in Bewegungsrichtung vorderen Seite des Kratzerauslegers (bezogen auf die Bewegung des Kratzerauslegers in Längsrichtung der Halde) ein hohes Gutbett, in das die Kratzerschaufeln einschneiden. Dieses Gutbett bildet für die Kratzerschaufeln die notwendige Abstützung, die erforderlich ist, damit sich innerhalb der Kratzerschaufeln das von den Schaufeln erfaßte Schüttgut in Querrichtung der Schaufel von der in Bewegungsrichtung (in Längsrichtung der Halde) vorderen Außenseite zur gegenüberliegenden Seite bewegt.

Anders liegen dagegen die Verhältnisse im unteren Bereich der Schüttguthalde. Da hier die Kratzerschaufeln zunehmend weniger tief in die Haldenoberfläche eingreifen, baut sich die für den Quertransport des Schüttgutes in der Schaufel notwendige Abstützung in Form eines Schüttgutberges bzw. Materialwulstes auf der Schneidseite der Kratzerschaufeln (d.h. auf der in Längsrichtung der Halde vorderen Außenseite des Kratzerauslegers) auf. Die Dimensionen dieses Schüttgutberges sind der Austragsleistung proportional. Mitbestimmend ist ferner das spezifische Gewicht des Schüttgutes. Je geringer die Dichte des Schüttgutes ist, umso größer sind die Abmessungen des Gutberges.

Die beträchtliche Reibung, die zwischen diesem im wesentlichen stationären Gutberg und dem umlaufenden Kratzerförderer auftritt, führt zu einem erheblichen Energieverlust und zu einem starken Verschleiß an den bewegten Teilen des Seitenkratzers.

Der Erfindung liegt daher die Aufgabe zugrunde, einen Seitenkratzer entsprechend dem Oberbegriff des Anspruches 1 so auszubilden, daß die Ausbildung eines Gutberges auf der Schneidseite des Kratzerförderers im unteren Bereich der Schüttguthalde vermieden wird.

Diese Aufgabe wird erfindungsgemäß durch das kennzeichnende Merkmal des Anspruches 1 gelöst.

Zweckmäßige Ausgestaltungen der Erfindung sind Gegenstand der Unteransprüche.

Ein Ausführungsbeispiel der Erfindung ist in der Zeichnung veranschaulicht. Es zeigen

Fig. 1 eine Seitenansicht eines erfindungsgemäßen Seitenkratzers,
Fig. 2 einen Schnitt längs der Linie A-B der Fig.1,
Fig. 3 einen Schnitt (entsprechend Fig. 2) durch einen bekannten Seitenkratzer ohne die erfindungsgemäß vorgesehenen Abstützelemente.

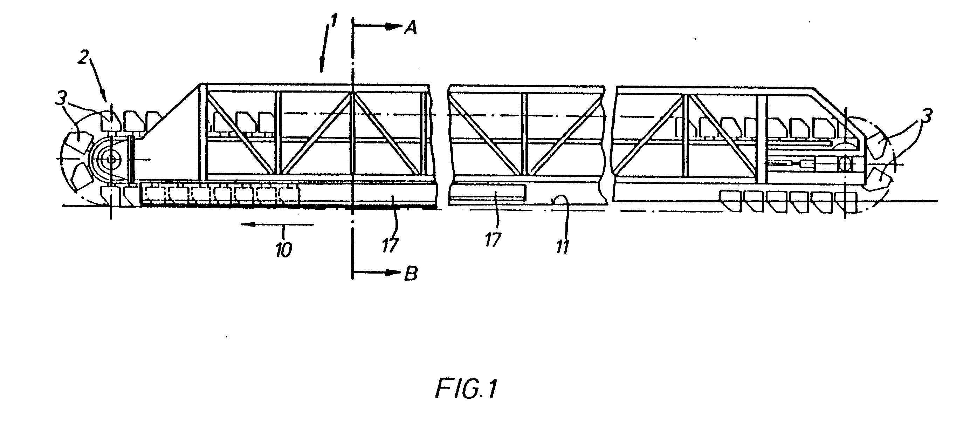

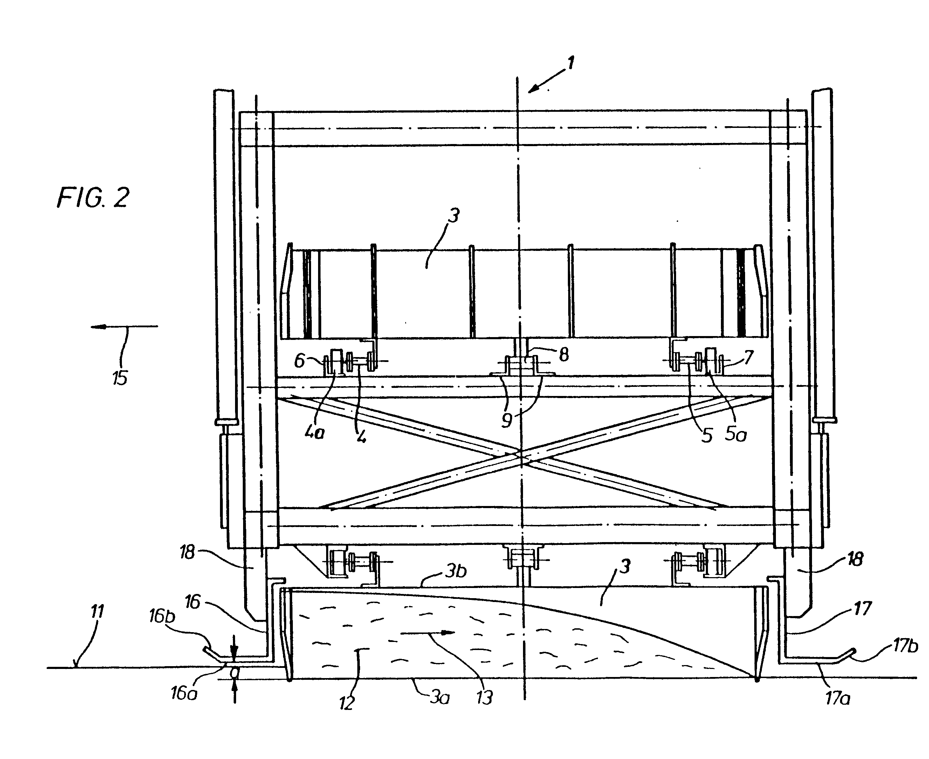

Der in den Fig. 1 und 2 dargestellte erfindungsgemäße Seitenkratzer zum Schüttgutaustrag aus einer Schüttguthalde enthält einen Kratzerausleger 1, der im Bereich des Haldenfußes (in Fig. 1 linkes Ende des Kratzerauslegers 1) um eine parallel zur Längsrichtung der Halde verlaufende Achse schwenkbar ist.

Der Kratzerausleger 1 trägt einen Kratzerförderer 2, der eine Vielzahl von in Längsrichtung des Kratzerauslegers 1 endlos umlaufenden Kratzerschaufeln 3 enthält.

Die Kratzerschaufeln sind über zwei Rollenketten 4, 5 verbunden, deren Rollen 4a, 5a auf Führungsschienen 6, 7 des Kratzerauslegers 1 laufen. Rollen 8, die in Führungsschienen 9 laufen, dienen zur Sicherung der Kratzerschaufeln 3 gegen seitliche Kräfte.

Der Antrieb des Kratzerförderers 2, der in Richtung des Pfeiles 10 umläuft, erfolgt durch eine im Bereich des Kratzerfußes angeordnete Antriebseinrichtung.

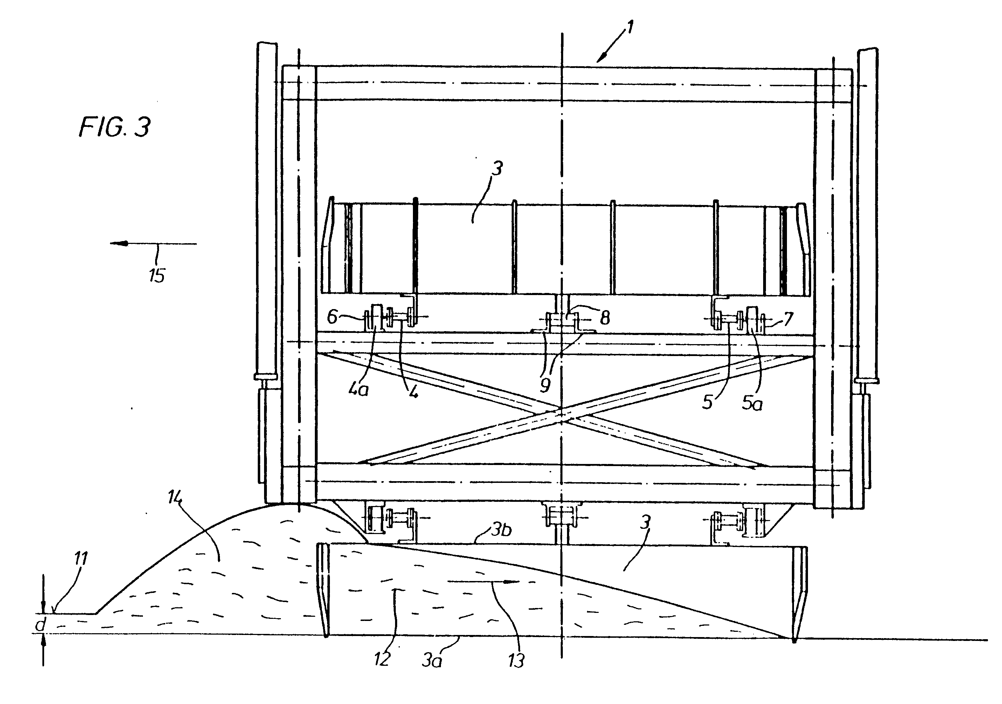

Vor Besprechung der für die Erfindung wesentlichen konstruktiven Einzelheiten des Seitenkratzers seien zunächst anhand von Fig. 3 die Verhältnisse erläutert, die sich im unteren Teil der Schüttguthalde im Betrieb des Seitenkratzers einstellen, wenn die erfindungsgemäßen Abstützelemente nicht vorgesehen sind.

Wie eingangs bereits erläutert, greifen die Kratzerschaufeln 3 im unteren Bereich der Schüttguthalde (nahe dem Haldenfuß) nur noch wenig in die Oberfläche der Halde ein. In Fig. 3 ist die Eindringtiefe der Schaufeln 3, d.h. der Abstand zwischen dem unteren Rand 3a der Kratzerschaufeln 3 und der Oberfläche 11 der Schüttguthalde, mit d bezeichnet.

Da die den Quertransport des in der Kratzerschaufel 3 enthaltenen Schüttgutes 12 in Richtung des Pfeiles 13 bewirkende Kraft eine Abstützung benötigt, die das im unteren Bereich der Schüttguthalde niedrige Schüttgutbett (der Stärke d) nicht liefern kann, bildet sich auf der Schneidseite des Kratzerförderers 2 (d.h. auf der bei der Bewegung in Längsrichtung der Halde vorderen Außenseite des Kratzerauslegers) ein Gutberg bzw. Materialwulst 14, der die Kratzerschaufeln 3 in der Höhe noch wesentlich überragt (die Bewegungsrichtung des Kratzerauslegers 1 in Längsrichtung der Halde ist in Fig. 3 mit dem Pfeil 15 gekennzeichnet).

Es leuchtet ein, daß sich zwischen diesem im wesentlichen stationären Gutberg 14 und den Kratzerschaufeln 3 eine beträchtliche Reibung ergibt, die Energieverluste sowie starken Verschleiß mit sich bringt.

Bei dem erfindungsgemäßen Seitenkratzer (gemäß den Fig. 1 und 2) ist zur Vermeidung des geschilderten Nachteiles der freie Raum zwischen der abzuräumenden Haldenoberfläche 11 und der Oberkante 3b der Kratzerschaufeln 3 wenigstens auf der bei der Bewegung in Längsrichtung der Halde (Pfeil 15) vorderen Außenseite des Kratzerauslegers 1, beim dargestellten Ausführungsbeispiel jedoch auf beiden Außenseiten, in dem dem Haldenfuß zugewandten unteren Teil des Kratzerauslegers 1 durch je ein Abstützelement 16, 17 abgedeckt, das am Kratzerausleger 1 über Winkel 18 gehaltert ist.

Wie Fig. 1 erkennen läßt, verringert sich der Abstand a zwischen dem unteren Rand 3a der Kratzerschaufeln 3 und der Unterkante 16a bzw. 17a der Abstützelemente 16, 17 zum Haldenfuß hin entsprechend der sich gleichfalls verringernden Eindringtiefe der Kratzerschaufeln 3 in das Schüttgut.

Die Abstützelemente 16, 17 erstrecken sich - ausgehend von dem dem Haldenfuß zugewandten unteren Ende des Kratzerauslegers 1 - (linkes Ende gemäß Fig. 1) - mindestens über die halbe Länge des Kratzerauslegers.

Dabei weisen die Abstützelemente 16, 17 einen L-förmigen Querschnitt auf. Das in Abräumrichtung (Pfeil 15) vordere Abstützelement 16 liegt dabei mit seinem waagerecht verlaufenden Schenkel (Unterkante 16a) auf der abzuräumenden Haldenoberfläche 11 auf. Der waagerecht verlaufende Schenkel der Abstützelemente 16, 17 ist mit einem nach oben aufgebogenen Außenrand 16b, 17b versehen.

Bei der erfindungsgemäßen Gestaltung ersetzt das Abstützelement 16 (Fig. 2) gewissermaßen den Gutberg 14 (Fig. 3) und liefert die notwendige Abstützung für die Kraft, die in der Kratzerschaufel 3 den Quertransport des Schüttgutes 12 in Richtung des Pfeiles 13 bewirkt. Das Abstützelement 16 deckt hierbei den Teil der Höhe der Kratzerschaufeln 3 ab, der sich über der Halden-Oberfläche 11 (in Abräumrichtung, Pfeil 15, vor dem Kratzerausleger 1 liegend) befindet. Das Schüttgut kann sich nun nur noch zwischen dem Abstützelement 16 und der Kratzerschaufel 3 bewegen, was Reibung und Verschleiß wesentlich verringert

## Patentansprüche

1. Seitenkratzer zum Schüttgutaustrag aus einer Schuttguthalde, enthaltend

a) einen vom Haldenfuß zum Haldenfirst reichenden, in Längsrichtung der Halde verfahrbaren Kratzerausleger (1), der im Bereich des Haldenfußes um eine parallel zur Längsrichtung der Halde verlaufende Achse schwenkbar ist,

b) einen vom Kratzerausleger (1) getragenen Kratzerförderer (2) mit einer Vielzahl von in Längsrichtung des Kratzerauslegers (1) endlos umlaufenden Kratzerschaufeln (3),

gekennzeichnet durch folgendes Merkmal:

c) der freie Raum zwischen der abzuräumenden Haldenoberfläche (11) und der Oberkante (3b) der Kratzerschaufeln (3) ist wenigstens auf der bei der Bewegung in Längsrichtung der Halde vorderen Außenseite des Kratzerauslegers (1) sowie wenigstens in dem dem Haldenfuß zugewandten unteren Teil des Kratzerauslegers durch ein am Kratzerausleger gehaltertes Abstützelement (16) abgedeckt.

2. Seitenkratzer nach Anspruch 1, dadurch gekennzeichnet, daß sich der Abstand (a) zwischen dem unteren Rand (3a) der Kratzerschaufeln (3) und der Unterkante (16a) des Abstützelementes (16) entsprechend einer abnehmenden Eindringtiefe der Kratzerschaufeln (3) in das Schüttgut zum Haldenfuß hin verringert.

3. Seitenkratzer nach Anspruch 1, dadurch gekennzeichnet, daß an beiden Außenseiten des Kratzerauslegers (1) je ein Abstützelement (16, 17) vorgesehen ist.

4. Seitenkratzer nach Anspruch 1, dadurch gekennzeichnet, daß sich das Abstützelement (16), ausgehend von dem dem Haldenfuß zugewandten unteren Ende des Kratzerauslegers (1), mindesten über die halbe Länge des Kratzerauslegers erstreckt.

5. Seitenkratzer nach Anspruch 1, dadurch gekennzeichnet, daß das Abstützelement (16) einen L-förmigen Querschnitt aufweist und mit seinem waagerecht verlaufenden Schenkel auf der abzuräumenden Haldenoberfläche (11) aufliegt.

6. Seitenkratzer nach Anspruch 5, dadurch gekennzeichnet, daß der waagerecht verlaufende Schenkel des Abstützelementes (16) einen nach oben aufgebogenen Außenrand (16b) besitzt.

## Claims

1. Lateral scraper for the discharge of loose material from a stockpile of bulk material, containing:

a) a scraper arm (1) which extends from the foot of the stockpile to the top of the stockpile, is movable in the longitudinal direction of the stockpile and is pivotable in the region of the foot of the stockpile about an axis which runs parallel to the longitudinal direction of the stockpile,

b) a scraper conveyor (2) which is carried by the scraper arm (1) and has a plurality of scraper scoops which continuously move round in the longitudinal direction of the scraper arm (1),

characterized by the following feature:

c) the free space between the surface (11) of the stockpile to be cleared and the upper face (3b) of the scraper scoops (3) is covered by a support element (16) mounted on the scraper arm at least on the outer side of the scraper arm which is to the fore during the movement in the longitudinal direction of the stockpile and at least in the lower part of the scraper arm facing the foot of the stockpile.

2. Lateral scraper as claimed in claim 1, characterised in that the distance (a) between the lower edge (3a) of the scraper blades (3) and the lower face (16a) of the support element (16) reduces towards the foot of the stockpile corresponding to the depth of penetration of the scraper scoops (3) into the bulk material.

3. Lateral scraper as claimed in claim 1, characterised in that a support element (16, 17) is provided on both outer sides of the scraper arm (1).

4. Lateral scraper as claimed in claim 1, characterised in that the support element (16) extends at least over half the length of the scraper arm (10) starting from the lower end of the scraper arm facing the foot of the stockpile.

5. Lateral scraper as claimed in claim 1, characterised in that the support element (16) has an L-shaped cross-section and rests with its horizontally extending arm on the surface (11) of the slope to be cleared.

6. Lateral scraper as claimed in claim 5, characterised in that the horizontally extending arm of the support element (16) has an outer edge (16a) which is bent upwards.

## Revendications

1. Gratteur latéral d'enlèvement de la matière en vrac d'une halde, comprenant:

a) une console (1) allant du pied au sommet de la halde, déplaçable dans la direction de la longueur de cette dernière et orientable autour d'un axe situé à proximité du pied de la halde et parallèle à la direction de la longueur de cette dernière,

b) un convoyeur (2) supporté par la console (1) et équipé de multiples racloirs (3) se déplaçant en un mouvement continu sans fin dans la direction de la longueur de la console (1),

caractérisé en ce que:

c) un élément d'appui (16) supporté par la console recouvre l'espace libre compris entre la surface (11) de la halde devant être évacuée et le bord supérieur (3b) des racloirs (3), au moins du côté antérieur et extérieur de la console (1) lors du déplacement dans la direction de la longueur de la halde et au moins à la partie inférieure de la console tournée vers le pied de la halde.

2. Gratteur latéral selon la revendication 1, caractérisé en ce que la distance (a) séparant le bord inférieur (3a) des racloirs (3) et le bord inférieur (16a) de l'élément d'appui (16) diminue vers le pied de la halde conformément à la diminution de la profondeur de pénétration des racloirs (3) dans la matière en vrac.

3. Gratteur latéral selon la revendication 1, caractérisé en ce qu'un élément d'appui (16, 17) est prévu sur chacun des deux côtés extérieur de la console (1).

4. Gratteur latéral selon la revendication 1, caractérisé en ce que l'élément d'appui (16) se prolonge au moins sur la moitié de la longueur de la console à partir de l'extrémité inférieure de cette dernière qui est tournée vers le pied de la halde.

5. Gratteur latéral selon la revendication 1, caractérisé en ce que l'élément d'appui (16) a une section en cornière et son aile horizontale repose sur la surface (11) de la halde devant être évacuée.

6. Gratteur latéral selon la revendication 5, caractérisé en ce que le bord extérieur (16b) de l'aile horizontale de l'élément d'appui (16) est recourbé vers le haut.

FIG.1

0 230 612

FIG. 2

0 230 612

FIG. 3